# EUROPÄISCHE PATENTSCHRIFT

(11) **EP 1 424 157 B1**
(45) Veröffentlichungstag und Bekanntmachung des Hinweises auf die Patenterteilung: **01.02.2006**
(21) Anmeldenummer: 02026719.1
(22) Anmeldetag: 30.11.2002
(51) Int. Cl.: B23K 11/00, H01R 43/02

(54) **Verfahren zum Schweisskompaktieren und Kompaktiermaschine**
Process and device for compacting and subsequently welding electric conductors
Procédé et dispositif pour le compactage et le soudage subséquent de conducteurs électriques

(43) Veröffentlichungstag der Anmeldung: 02.06.2004
(73) Patentinhaber: Keller, Elke, 77815 Bühl (DE)
(72) Erfinder: Keller, Peter, 76534 Baden-Baden (DE)
(74) Vertreter: Hellmayr, Wolfgang

(56) Entgegenhaltungen:
- EP-A- 0 517 040
- DE-A- 4 117 697
- DE-A- 4 406 337

## Beschreibung

Die Erfindung liegt auf dem Gebiet des Mikroschweißens, insbesondere der Bereitstellung von Kompaktiermaschinen zum Verdichten von Litzenenden (Litzenkompaktiermaschinen) und Verbinden der Litzenenden mit elektrischen Leitern durch Elektroschweißen zur Herstellung von elektrischen Bauelementen, ganz besonders in der Kraftfahrzeugzulieferer-Industrie.

Litzenkompaktiermaschinen sind beispielsweise aus der EP 0 517 040 A1, die ein Verfahren und eine Maschine nach dem Oberbegriffen der Ansprüche 1 bzw. 5 offenbart, bekannt. Beim herkömmlichen Kompaktieren werden z. B. gedrillte Kupferdrahtbündel (Litzen) zwischen Backen aus einem geeigneten keramischen Material (horizontale X-Achse) und einem Elektrodenpaar (vertikale Z-Achse) unter mechanischem Druck - eine obere Elektrode bewegt sich ähnlich einem Kolben gegen die Litze, die auf einer starren unteren Elektrode liegt - und mittels Widerstandserhitzung mit dem gewünschten elektrischen Bauteil durch Schweißen, Sintern u. s. w. im allgemeinen im 1 bis 10 KA-Bereich dauerhaft verbunden. Solche Bauteile können beispielsweise aus Aluminium, Kupfer oder verzinkten Metallen und - legierungen, grundsätzlich aus schweißbaren Materialien, bestehen. Dieser Prozeß, der unter anderem von dem Material und den Druck/Temperaturbedingungen während des Kompaktierens abhängt, wird in der nachfolgenden Beschreibung und in den Ansprüchen der Einfachheit halber als "Schweißkompaktieren" bezeichnet werden, obwohl eine Verflüssigung des Metalls nicht immer erfolgt und auch nicht in jedem Falle zur Erzielung einer dauerhaften, festen Verbindung zwischen Litzenende und Bauteil erforderlich ist.

Nachteile dieser bekannten Kompaktiermaschinen sind unter anderen, daß nach dem Ausschalten des Stroms und Aufheben des Drucks und Hochfahrens der oberen Elektrode unerwünschte Partikel, wie abgeriebene Drahtteile der Litzenenden oder blättchenartige Metallreste, an den Keramikbacken bezw. Keramikformen zurückbleiben und nach einigen Arbeitstakten eine umständliche Reinigung der Backen bezw. Formen erforderlich machen.

Die Aufgaben, die sich dem Erfinder stellten, waren nun unter anderen, ein Verfahren und eine Vorrichtung bereitzustellen, mit denen es möglich wäre, diese Nachteile zu überwinden und das Schweißkompaktieren störungsfreier, d. h. mit geringeren Unterbrechungen, einfacheren Reinigungsmethoden, längeren Standzeiten der Elektroden, einfacheren Elektrodenformen und höheren Ausbeuten durchzuführen.

Diese und andere Ziele werden durch die vorliegende Erfindung

Gegenstand der Erfindung ist nun ein Verfahren zum Schweißkompaktieren von Litzen, insbesondere von Litzenenden, durch mechanisches Verdichten und/oder Verbinden von Litzen mit elektrischen Bauteilen und gleichzeitiges, vorausgehendes und/oder nachfolgendes Widerstandserhitzen der Litzen, die zwischen Hartkeramikbacken liegen, mittels einer zwischen den Keramikbacken in Richtung auf die Litze und auf eine hinter der Litze sich befindliche Gegenelektrode hin verfahrbaren Elektrode, das dadurch gekennzeichnet ist, daß man die Keramikbacken nach dem Schweißkompaktier-Takt an der Gegenelektrode dicht entlang fahren und die Verunreinigungen abstreifen.

Vorzugsweise fährt zunächst die vertikal (in der Z-Achse) verfahrbare Keramikbacke (7) und danach die horizontal (in der X-Achse) verfahrbare Keramikbacke (5) an der starren Gegenelektrode zur Abstreifung von Verunreinigungen entlang.

Ein weiterer Gegenstand der vorliegenden Erfindung ist eine Schweißkompaktiermaschine, enthaltend Keramikbacken (5; 7), deren Abstand zueinander (in der horizontalen X-Achse) einstellbar ist, zwei senkrecht zu den Keramikbacken angeordnete, sich gegenüberstehende Elektroden, und zwar eine obere (1) und eine untere (2), deren Abstand zueinander (in der vertikalen Z-Achse) einstellbar ist, eine Vorrichtung zum manuellen oder automatischen Einlegen der schweißzukompaktierenden Litzen und mit ihnen zu verbindenden Bauteile und eine Meß- und Steuerungsvorrichtung zur Steuerung des Schweißkompaktier-Vorganges, dadurch gekennzeichnet ist, daß die Meß - und Steuervorrichtung derart ausgebildet ist, daß die Keramikbacken in gesteuertem Abstand von der Elektrode (2) nach einem Schweißkompaktier-Takt an der Elektrode (2) zur Abstreifung von Verunreinigungen vorbeigefahren werden können.

Der Abstand der unteren Elektrode beim Vorbeifahren an den Keramikbacken muß mindestens so groß sein, daß Spiel zwischen den Oberflächen bleibt, und beträgt beispielsweise 0,2 bis 3, vorzugsweise 1 bis 1,5 mm.

Das neue Verfahren zum Schweißkompaktieren und die neue Schweißkompaktiennaschine werden nun an Hand der Figuren I bis VI näher veranschaulicht. Es bedeuten
1 obere Elektrode, vertikal verfahrbar,
2 untere Elektrode, fest stehend,
3 Membran zum Nachsetzen von 1,
4 horizontalen Schieber (X-Achse) mit
5 seiner Keramikbacke,
6 vertikalen Schieber (Z-Achse) mit
7 seiner Keramikbacke.

Die obere Elektrode 1, die an einem Feinpunktschweißkopf montiert ist, kann pneumatisch oder elektrisch angetrieben werden. Der Hub ist abhängig von dem verwendeten Schweißkopf (in der Zeichnung nicht dargestellt) und kann bis etwa 50 mm betragen. Die Elektrode 1 ist mit Spannexzenter und Spannplatte fomschlüssig geklemmt. Sie wird zum Nachsetzen pneumatisch angesteuert. Die Elektrodenhalter sind wassergekühlt ausgelegt. Die Membran ist zwischen Elektrodenhalter und Antriebseinheit montiert. (Diese drei Elemente sind in den Zeichnungen nicht dargestellt).

In der in der Fig. I dargestellten Position befindet sich die verfahrbare obere Elektrode 1 in der Grundstellung. Die Membran 3 ist ausgefedert. Die Schieber X 4 und Z 6 mit ihren zugehörigen Keramikbacken 5 und 7 befinden sich ebenfalls in der Grundstellung.

In der Fig. II ist im Gegensatz zu Fig. I der Schieber X 4 in Arbeitsstellung gezeichnet. Die Verschiebung aus der Grund- in die Arbeitsstellung erfolgt pneumatisch oder mittels eines Servomotors.

Auf dem nächsten Zeichnungsblatt, Fig. III, befindet sich auch die obere Elektrode 1 in der Arbeitsstellung. Das Verfahren erfolgt pneumatisch oder mittels Servomotor. Der Schieber Z 6 fährt in Arbeitsstellung. Die Membran 3 ist eingefedert. Das Maß des Kompaktierungsraumes 8 entspricht der erfolgten mechanischen Verdichtung.

In der Fig. IV ist die beschriebene Ausführungsform der erfindungsgemäßen Schweißkompaktiermaschine in der komprimiertesten Position dargestellt. Nach der Ausfederung der Membran 3 ist der maximale Hub der oberen Elektrode 1 erreicht. Das Kompaktiermaß in der X-Achse ist über eine Anschlagschraube 9 oder beispielsweise über einen Servoantrieb einstellbar. Das Kompaktiermaß Z wird über eine Wegmessung durch Abschalten des Stromes nach der Verdichtung kontrolliert.

Die auf dem nächsten Zeichnungsblatt (Fig. V) dargestellte Position zeigt die obere Elektrode 1 und den Schieber X 4 in ihrer Grundstellung. Der Schieber Z 6 befindet sich noch in der Position vor der Reinigungsstellung. Die Membran 3 ist ausgefedert. Die Keramikbacke des Schiebers Z 6 steht noch oberhalb der unteren Elektrode 2.

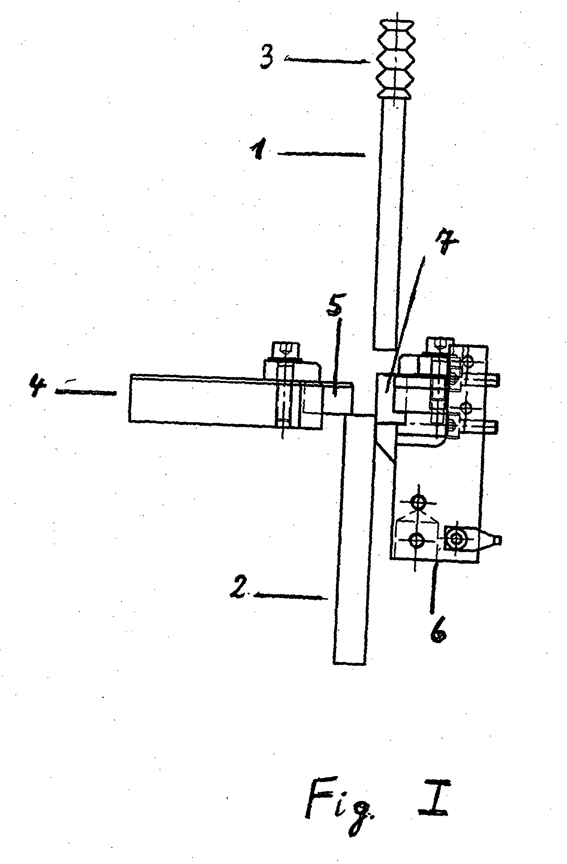

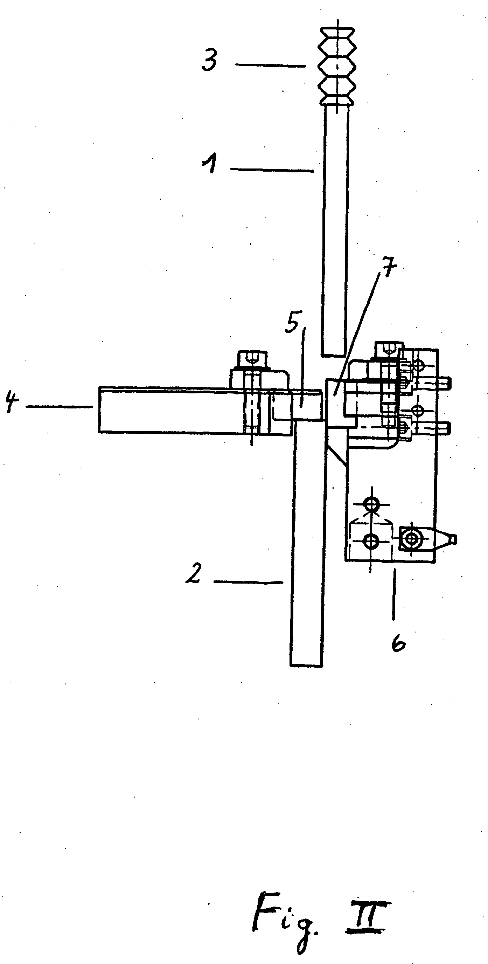

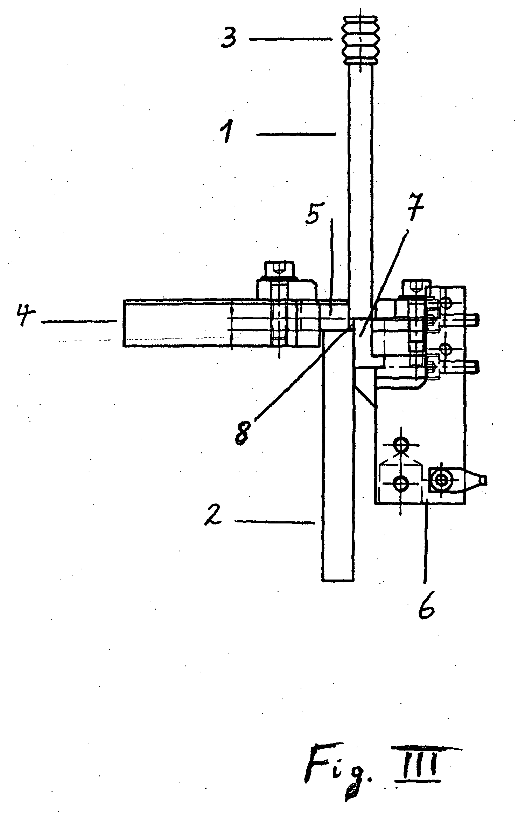

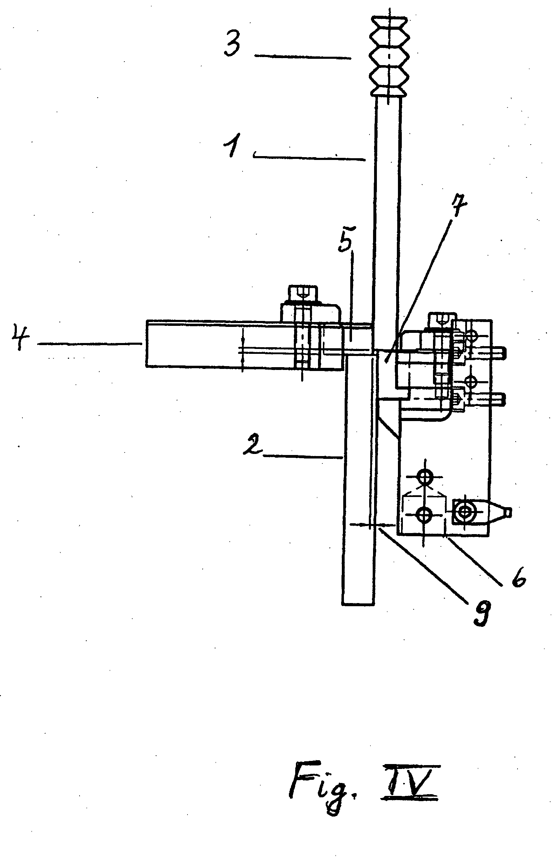

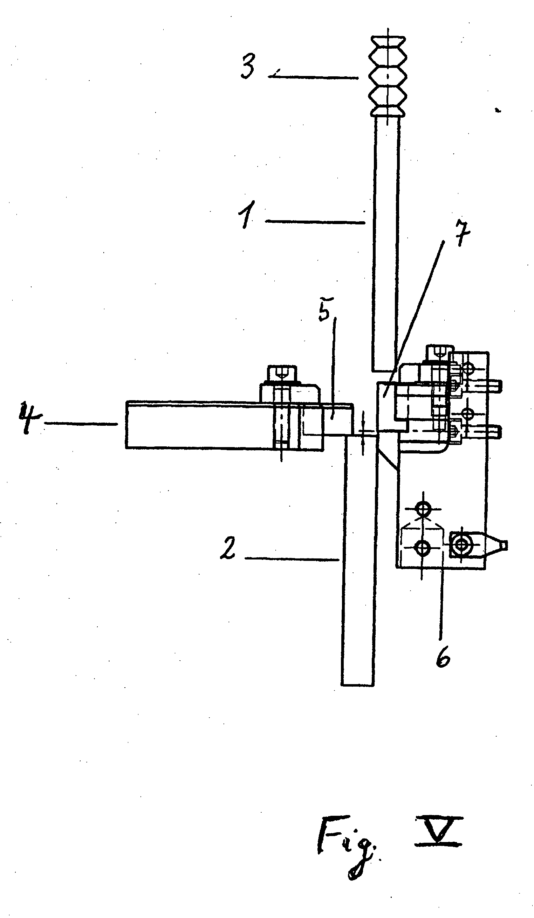

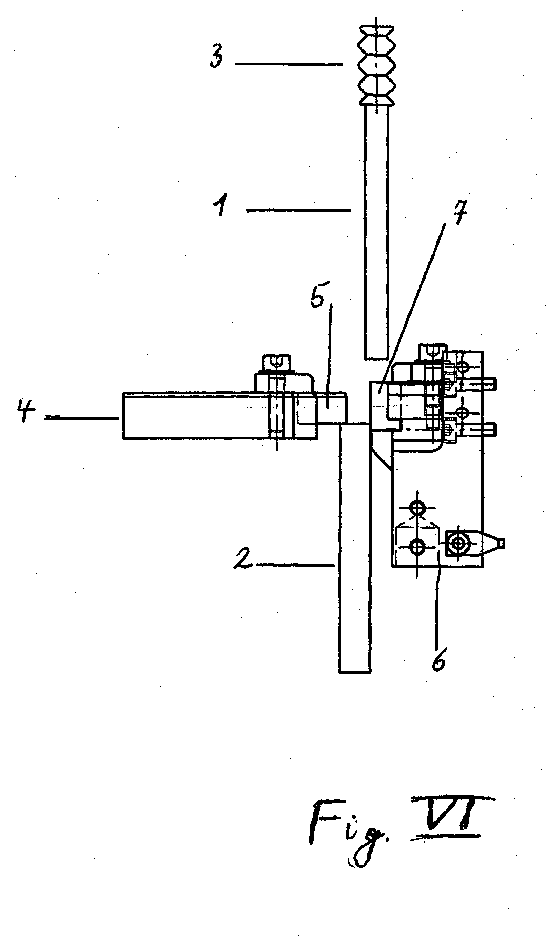

In Fig. 6 schließlich befindet sich auch der Schieber Z 6 nach dem Reinigungsvorgang in der Grundstellung. Der Hub des Schiebers Z 6 erfolgt pneumatisch oder mittels eines Servomotors.

Die Schieber sind in Richtung der X-Achse (Schieber 4) bezw. in Richtug der Z-Achse (Schieber 6) fahrbar. Der Antrieb erfolgt beispielsweise pneumatisch, hydraulisch oder durch Antrieb mittels Elektromotoren. Die Schieber bestehen in der bevorzugten Bauweise aus Stahl. Die Keramikbacken bestehen aus harten Keramikzusammensetzungen, vorzugsweise aus Schneidkeramik.

Der mechanische Teilschritt des erfindungsgemäßen Kompaktierungsverfahrens nimmt beispielsweise ungefähr 2 Sekunden, der nachfolgende elektrische Teilschritt ungefähr 1 Sekunde in Anspruch

Mit dem erfindungsgemäßen Verfahren und der erfindungsgemäßen Vorrichtung ist es möglich, das Schweißkompaktieren von Litzen mit geringeren Unterbrechungen, also insgesamt in kürzerer Zeit und mit höheren Ausbeuten, durchzuführen, als es in der Vergangenheit möglich war. Durch die neue einfache Reinigungsmethode wird die Lebenszeit der verwendeten Schweißelektroden verlängert, und es werden längere Standzeiten der Elektroden erzielt. Während bei zum Stand der Technik gehörenden Verfahren und Vorrichtungen kompliziertere Elektrodenformen verwendet werden müssen (z. B. abgekröpfte Elektroden), erlaubt die erfindungsgemäße Methode die Verwendung einfacher klassischer Elektrodenformen.

## Patentansprüche

1. Verfahren zum Schweißkompaktieren von Litzen, insbesondere von Litzenenden, durch mechanisches Verdichten und gegebenenfalls Verbinden von Litzen mit elektrischen Bauteilen und gleichzeitiges, vorausgehendes und/oder nachfolgendes Widerstandserhitzen der Litzen, die zwischen Hartkeramikbacken liegen, mittels einer zwischen den Keramikbacken in Richtung auf die Litze und auf eine hinter der Litze sich befindliche Gegenelektrode hin verfahrbaren Elektrode, **dadurch gekennzeichnet, daß** man die Keramikbacken nach dem Schweißkompaktier-Takt an der Gegenelektrode dicht entlang fährt und die Verunreinigungen abstreift.

2. Verfahren nach Anspruch 1, **dadurch gekennzeichnet, daß** man zunächst die vertikal (in der Z-Achse) verfahrbare Keramikbacke (7) und danach die horizontal (in der X-Achse) verfahrbare Keramikbacke (5) an der Gegenelektrode zur Abstreifung von Verunreinigungen entlangfährt.

3. Verfahren nach Anspruch 1 oder 2, **dadurch gekennzeichnet, daß** man so verfährt, daß der Abstand der unteren Elektrode beim Vorbeifahren an den Keramikbacken 0,2 bis 3, vorzugsweise 1 bis 1,5 mm, beträgt.

4. Verfahren nach einem der Anspruch 1 bis 3, **dadurch gekennzeichnet, daß** im Falle des Verbindens von Litzen mit elektrischen Bauteilen solche Bauteile aus Aluminium, Kupfer oder verzinkten Metallen oder Legierungen bestehen.

5. Schweißkompaktiermaschine, enthaltend Keramikbacken, deren Abstand zueinander in der horizontalen X-Achse einstellbar ist, zwei senkrecht zu den Keramikbacken angeordnete, sich gegenüberstehende Elektroden, und zwar eine obere (1) und eine untere (2), deren Abstand zueinander in der vertikalen Z-Achse einstellbar ist, eine Vorrichtung zum manuellen oder automatischen Einlegen der schweißzukompaktierenden Litzen und gegebenenfalls mit ihnen zu verbindenden Bauteile und eine Meß- und Steuerungsvorrichtung, **dadurch gekennzeichnet ist, dass** die Meß- und Steuerungsvorrichtung derart ausgebildet ist, dass die Keramikbacken in gesteuertem Abstand von der Elektrode nach einem Schweißkompaktier-Takt an der Elektrode (2) zur Abstreifung von Verunreinigungen vorbeigefahren werden.

## Claims

1. A method for the weld-compacting of flexible leads, in particular of flexible-lead ends, by mechanical compacting and, where appropriate, joining of flexible leads with electrical components and simultaneous, preceding and/or subsequent resistance heating of the flexible leads, which lie between hard-ceramic jaws, by means of an electrode traversable between the ceramic jaws in the direction of the flexible leads and of a counter-electrode located behind the flexible leads, **characterised in that** the ceramic jaws, after the weld-compacting cycle, are passed closely along the counter-electrode and strip off the impurities.

2. The method according to claim 1, **characterised in that** firstly the ceramic jaw (7) traversable vertically (in the Z-axis) and then the ceramic jaw (5) traversable horizontally (in the X-axis) is passed along the counter-electrode for the purpose of stripping off impurities.

3. The method according to claim 1 or 2, **characterised in that** one proceeds in such a way that the spacing of the lower electrode when passing by the ceramic jaws amounts to 0.2 to 3, preferably 1 to 1.5 mm.

4. The method according to any one of claims 1 to 3, **characterised in that**, in the case of joining flexible leads with electrical components, such components are made of aluminium, copper or zinc-coated metals or alloys.

5. A weld-compacting machine, comprising ceramic jaws, the spacing whereof with respect to one another is adjustable in the horizontal X-axis, two electrodes lying opposite one another disposed normal to the ceramic jaws, more precisely an upper electrode (1) and a lower electrode (2), the spacing whereof with respect to one another is adjustable in the vertical Z-axis, a device for the manual or automatic insertion of the flexible leads to be weld-compacted and, where appropriate, components to be joined with the latter and a measuring and control device, **characterised in that** the measuring and control device is designed in such a way that, after a weld-compacting cycle, the ceramic jaws are passed by the electrode (2) at a controlled distance from the electrode for the purpose of stripping off impurities.

## Revendications

1. Procédé de compactage par soudage de torons, notamment d'extrémités de torons par compression mécanique et le cas échéant par liaison de torons avec des éléments électriques et par chauffage simultané, préalable et/ou suivant par résistances des torons qui se situent entre des mâchoires en céramique dure, à l'aide d'une électrode déplaçable entre les mâchoires en céramique, en direction du toron et d'une contre électrode située derrière le toron, **caractérisé en ce qu'**après le cycle de compactage par soudage, on déplace les mâchoires en céramique très près le long de la contre électrode et on racle les impuretés.

2. Procédé selon la revendication 1, **caractérisé en ce qu'**on déplace d'abord la mâchoire en céramique (7) déplaçable à la verticale (dans l'axe Z), puis la mâchoire en céramique (5) déplaçable à l'horizontale (dans l'axe X) le long de la contre électrode pour racler les impuretés.

3. Procédé selon la revendication 1 ou 2, **caractérisé en ce qu'**on déplace jusqu'à ce que le distance de l'électrode inférieure lors du déplacement devant la mâchoire en céramique soit de 0,2 à 3, de préférence de 1 à 1,5 mm.

4. Procédé selon l'une quelconque des revendications 1 à 3, **caractérisé en ce que** dans le cas de la liaison de torons avec des éléments électriques, de tels éléments électriques sont en aluminium, en cuivre ou en métaux ou alliages galvanisés.

5. Machine de compactage par soudage, comportant des mâchoires en céramique, dont la distance l'une par rapport à l'autre est réglable dans l'axe horizontal X, deux électrodes qui se font face, disposées à la perpendiculaire des mâchoires en céramiques, à savoir une électrode supérieure (1) et une électrode inférieure (2), dont la distance l'une par rapport à l'autre est réglable dans l'axe Z, un dispositif pour l'insertion manuelle ou automatique des torons devant être compactés par soudage et le cas échéant d'éléments devant être reliés avec ces derniers et un dispositif de mesure et de commande, **caractérisé en ce que** le dispositif de mesure et de commande est conçu de façon à ce qu'après un cycle de compactage par soudage, les mâchoires en céramiques soient déplacées à distance commandée de l'électrode devant l'électrode (2) pour racler des impuretés.
